(19) Europäisches Patentamt
European Patent Office
Office européen des brevets

(11) **EP 2 607 877 B1**

(12) **EUROPÄISCHE PATENTSCHRIFT**

(45) Veröffentlichungstag und Bekanntmachung des Hinweises auf die Patenterteilung:
**05.09.2018 Patentblatt 2018/36**

(51) Int Cl.:
***G01M 1/12*** *(2006.01)*

(21) Anmeldenummer: **12198487.6**

(22) Anmeldetag: **20.12.2012**

(54) **Schwerpunktermittlung**

Determination of centre of gravity

Détermination du centre de gravité

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2011 DE 102011056777**

(43) Veröffentlichungstag der Anmeldung:
**26.06.2013 Patentblatt 2013/26**

(73) Patentinhaber: **Deutsches Zentrum für Luft- und Raumfahrt e.V.**
**51147 Köln (DE)**

(72) Erfinder:
• **Wolfram, Jens**
**38527 Meine (DE)**
• **Seher-Weiß, Susanne**
**70565 Stuttgart (DE)**
• **Greiser, Steffen**
**38116 Braunschweig (DE)**

(74) Vertreter: **Aisch, Sebastian et al**
**Gramm, Lins & Partner**
**Patent- und Rechtsanwälte PartGmbB**
**Freundallee 13 a**
**30173 Hannover (DE)**

(56) Entgegenhaltungen:
**WO-A1-2004/074804    US-A- 4 110 605**
**US-A- 5 987 397    US-A1- 2002 165 690**

**Beschreibung**

Die Erfindung betrifft eine Einrichtung und ein Verfahren zur Ermittlung des tatsächlichen Schwerpunktes eines Fahrzeuges.

Der tatsächliche Schwerpunkt eines Flugzeuges hängt von einer Vielzahl von flug-, betriebs- und missionsabhängigen Parametern ab. Solche Parameter können beispielsweise die Art der zu transportierenden Lasten, die Verteilung der Lasten im Flugzeug, der Beladungszustand, die Anzahl der Passagiere oder die Menge des mitgeführten Treibstoffes sein, um nur beispielhaft ein paar aufzuzählen. Selbst während eines Fluges kann sich der tatsächliche Schwerpunkt des Flugzeuges deutlich von der theoretisch angenommenen Schwerpunktlage verschieben, beispielsweise deshalb, weil sich durch den Verbrauch des Treibstoffes die an Bord befindliche Treibstoffmenge ändert, was sich direkt auf die Lage des tatsächlichen Schwerpunktes auswirken kann.

Die Lage des tatsächlichen Schwerpunktes ist für den Piloten, insbesondere bei Hochleistungsfluggeräten wie bspw. Kampfflugzeugen oder Hubschraubern deshalb von großem Interesse, weil durch eine veränderte Schwerpunktlage sich das Flugverhalten verändern kann, was bei der Regelung und/oder vom Piloten berücksichtigt werden muss. Aber auch bei Transportflugzeugen, bei denen präzise Handhabung des Flugobjektes notwendig ist, ist die Kenntnis des tatsächlichen Schwerpunktes zur präzisen Steuerung des Flugobjektes wichtig. Dies gilt beispielsweise auch für Last tragende Hubschrauber.

Ist im theoretisch angenommenen Schwerpunkt des Flugzeuges eine Bewegungs- und/oder Beschleunigungssensorik verbaut, so lassen sich entsprechende Bewegungs- und/oder Beschleunigungsdaten im Schwerpunkt des Flugzeuges ermitteln. Diese Bewegungs- und/oder Beschleunigungsdaten können beispielsweise als Eingangsgrößen entsprechenden Instrumenten oder Regelungsautomatiken zugeführt werden, die u. a. in Abhängigkeit dieser Bewegungs- und/oder Beschleunigungsdaten im Schwerpunkt des Flugzeuges eine automatisierte Steuerung vornehmen oder das Flugzeug in bestimmten Fluglagen durch Ansteuerung entsprechender Stellglieder stabilisieren.

Da die Sensorik zur Erfassung der Bewegungs- und/oder Beschleunigungsdaten in der Regel fest im Flugzeug an dem theoretisch angenommenen Schwerpunkt angeordnet ist (bzw. ihre Ausgaben auf diesen umgerechnet werden), führt eine Abweichung des tatsächlichen Schwerpunktes von dem theoretisch angenommenen Schwerpunkt dazu, dass die Sensorik zusätzliche Bewegungs- und/oder Beschleunigungsanteile misst, die nicht auftreten würden, wäre die Sensorik im tatsächlichen Schwerpunkt des Flugzeuges angeordnet. Diese Fehler sind besondere bei intensiven Roll- und Nickbewegungen zu beobachten, insbesondere bei Fluggeräten, die eine hohe Agilität aufweisen.

Eine solche Abweichung vom theoretisch angenommenen Schwerpunkt kann bei einer sprungförmigen Rolleingabe am Flugobjekt beispielsweise dazu führen, dass die gemessenen Beschleunigungen ein umgedrehtes Vorzeichen haben, was bei einer Messung im tatsächlichen Schwerpunkt nicht zu erwarten wäre. Dies kann dann bei der Verwendung dieser Beschleunigung als Eingangsgröße in digitale Instrumente oder Regelungen zu Fehlern führen, die im Flugbetrieb störend oder sogar kritisch sein könnten. So führt beispielsweise die Verwendung derartiger fehlerhafter Beschleunigungsdaten als Eingangsgröße in eine digitale Kugellibelle dazu, dass eine falsch gerichtete Anzeige dargestellt wird, was zu Irritationen des Piloten führen kann. Werden solche fehlerhaften Beschleunigungsdaten als Eingabe für die Regelung des Fluggerätes verwendet, so können diese aufgrund der Schwerpunktverschiebung entstehenden Fehler dazu führen, dass die Stellgrößen des Fluggerätes versuchen, diesen Beschleunigungseindruck zu minimieren oder gar umzudrehen, was in ruckartigem oder instabilem Flugverhalten resultieren kann.

Aus der US 5,987,397 ist ein Verfahren zur Ermittlung des Gesamtgewichtes und der Lage des Schwerpunktes bei Hubschraubern bekannt, bei dem mit Hilfe eines neuronalen Netzes eine nichtlineare Korrelation verschiedenster Betriebsparameter bezüglich des Gewichtes und der Lage des Schwerpunktes gelernt wird. Durch Anlegen von aktuellen Betriebsparametern des aktuellen Flugzustandes an das neuronale Netz lässt sich dann das Gesamtgewicht sowie die Lage des Schwerpunktes als erlernter Wert aus dem neuronalen Netz ableiten, bei dem die einzelnen Betriebsparameter untereinander in Beziehung gesetzt wurden. Der Nachteil hierbei ist, dass das Ergebnis nur eine grobe Schätzung darstellt und die Genauigkeit darüber hinaus stark von den Trainingsdaten zum Anlernen des neuronalen Netzes abhängt.

Aus der US 6,275,769 B1 ist ein tragbarer Computer mit einem Display zur Ermittlung der Schwerpunktlage bekannt, bei dem über das Display eine Art Skizze des Flugzeuginnenraumes dargestellt wird. Über verschiedene Bereiche lassen sich dann der Beladungszustand und andere schwerpunktbeeinflussende Betriebsparameter für verschiedene Flugzeugbereiche einstellen, aus denen sich dann näherungsweise die Schwerpunktlage abschätzen lässt. Der Nachteil hierbei ist insbesondere darin zu sehen, dass flugabhängige Betriebsparameter, wie beispielsweise die Treibstoffmenge, nicht hinreichend berücksichtigt werden, so dass eine Veränderung des Schwerpunktes während des Fluges nicht erkennbar ist. Darüber hinaus liefert dieses Verfahren ebenfalls nur eine grobe Abschätzung.

Aus der US 2010/0063718 A1 ist des Weiteren ein Verfahren zum Abschätzen der Schwerpunktlage bei Flugzeugen bekannt, bei dem mit Hilfe von Dehnungsmessstreifen an dem Fahrwerk des Flugzeuges Dehnungswerte gemessen werden, wenn das Flugzeug am Boden parkt. Anhand dieser Dehnungsmesswerte von den einzelnen Elementen des gesamten Fahrwerkes lässt sich dann der Schwerpunkt des Flugzeuges berechnen. Zwar lässt sich hierdurch im Vorfeld bei der Beladung des Flugzeuges ein Einfluss auf den Beladungszustand nehmen, da kontinuierlich eine Schwerpunktermittlung am Boden durchgeführt werden kann. Eine Schwerpunktverschiebung während des Fluges ist aber auch hiermit nicht erkennbar.

Aus der WO 2004/074804 A1 ist ein Verfahren und eine Vorrichtung zum Ermitteln der Höhe des Schwerpunktes bei LKWs bekannt, wobei bei einer Beschleunigungsfahrt die auf die Hinterräder wirkenden Kräfte gemessen und dann die Höhe des Schwerpunktes in Abhängigkeit der gemessenen Kräfte ermittelt wird.

Es ist daher Aufgabe der vorliegenden Erfindung ein verbessertes System und ein verbessertes Verfahren anzugeben, mit dem der tatsächliche Schwerpunkt eines Flugzeuges auch während des Fluges sicher und genau berechnet werden kann, und zwar unabhängig von den schwerpunktbeeinflussenden Betriebsparametern.

Die Aufgabe wird erfindungsgemäß gelöst mit den Merkmalen des Patentanspruchs 1 sowie den Merkmalen des Patentanspruchs 6.

Erfindungsgemäß wird somit vorgeschlagen, dass zunächst über eine Steuerbefehls-Eingabeschnittstelle entsprechende Steuerbefehlseingaben, die zur Bewegungssteuerung des Fahrzeuges dienen, empfangen bzw. abgegriffen werden. Anhand eines Bewegungsmodells des Fahrzeuges lässt sich dann in Abhängigkeit der empfangenen Steuerbefehlseingaben eine modellierte Bewegung des Fahrzeuges virtuell ableiten, so dass sich die Bewegung des Fahrzeuges bezüglich der tatsächlichen Steuerbefehlseingaben in einer Bewegungsmodelleinheit simulieren lässt. Aus dieser simulierten bzw. modellierten Bewegung bezüglich der Steuerbefehlseingaben lassen sich dann an einem Modell-Referenzpunkt des Fahrzeuges, beispielsweise der angenommene theoretische Schwerpunkt des Fahrzeuges, Referenz-Beschleunigungsdaten berechnen. Damit können für einen vorbestimmten Modell-Referenzpunkt des Fahrzeuges entsprechende Referenz-Beschleunigungsdaten berechnet werden, die sich aus einer simulierten Bewegung bezüglich tatsächlicher Steuerbefehlseingaben ableiten lassen.

Mit Hilfe einer an einem Sensor-Referenzpunkt des Fahrzeuges verbauten Beschleunigungssensorik lassen sich parallel dazu Sensor-Beschleunigungsdaten erfassen, die sich aus einer tatsächlichen Bewegung des Fahrzeuges am Sensor-Referenzpunkt ergeben, wobei die tatsächliche Bewegung des Fahrzeuges aus den zuvor eingegebenen Steuerbefehlseingaben resultiert. Im einfachsten Fall sind der Modell-Referenzpunkt, der Sensor-Referenzpunkt sowie der theoretisch angenommene Schwerpunkt identisch.

Somit wurden bezüglich der eingegebenen Steuerbefehlseingaben berechnete bzw. modellierte Referenz-Beschleunigungsdaten an dem Modell-Referenzpunkt und tatsächlich gemessene Sensor-Beschleunigungsdaten an dem Sensor-Referenzpunkt des Fahrzeuges ermittelt, die dann Eingang in die Recheneinheit zur Ermittlung des tatsächlichen Schwerpunktes finden. Die Recheneinheit ist dabei derart eingerichtet, dass sie den tatsächlichen Schwerpunkt des Fahrzeuges in Abhängigkeit von einem theoretisch angenommenen Schwerpunkt des Fahrzeuges und einer Differenz zwischen den Referenz-Beschleunigungsdaten und den Sensor-Beschleunigungsdaten ermitteln kann. Unter Zugrundelegung der Annahme, dass das Bewegungsmodell eine Bewegung des Fahrzeuges hinsichtlich der Steuerbefehlseingaben ableitet, die den theoretischen bzw. angenommenen Schwerpunkt des Fahrzeuges berücksichtigt, ergibt sich bei einer Schwerpunktverschiebung eine Differenz zwischen den Referenz-Beschleunigungsdaten und den tatsächlich gemessenen Sensor-Beschleunigungsdaten, die auf eine Schwerpunktverschiebung schließen lassen. Aus der Differenz und der zugrunde gelegten Kinematik des Fahrzeuges lässt sich dann die sogenannte Schwerpunktablage, d. h. die Verschiebung des tatsächlichen Schwerpunktes weg von dem theoretisch angenommenen Schwerpunktes, ermitteln.

Ist keine Schwerpunktablage vorhanden, so dass der tatsächliche Schwerpunkt dem theoretisch angenommenen Schwerpunkt entspricht, so sind die Referenz-Beschleunigungsdaten mit den Sensor-Beschleunigungsdaten im Wesentlichen identisch, sofern der Modell-Referenzpunkt mit dem Sensor-Referenzpunkt übereinstimmt. Andernfalls ist aufgrund der Kinematik auch eine Umrechnung möglich.

Vorteilhafterweise sind die Referenzpunkte deckungsgleich mit dem theoretisch angenommenen Schwerpunkt des Fahrzeuges. In diesem Fall ist auch die Beschleunigungssensorik zur Ermittlung der Sensor-Beschleunigungsdaten im theoretisch angenommenen Schwerpunkt des Fahrzeuges installiert. Bei einer Verschiebung des Schwerpunktes werden mit Hilfe der Beschleunigungssensorik dann Beschleunigungsdaten gemessen, die sich von den Referenz-Beschleunigungsdaten, die den Idealfall abbilden, unterscheiden, wobei anhand der Unterschiede und der Kinematik des Fahrzeuges der tatsächliche Schwerpunkt berechnet werden kann.

Denkbar ist aber auch, dass die Referenzpunkte mit dem theoretisch angenommenen Schwerpunkt nicht identisch sind, so dass die Differenz, die sich aus den Referenz-Beschleunigungsdaten und den Sensor-Beschleunigungsdaten ergibt, anhand der physikalischen Kinematik des Fahrzeuges auf den angenommenen theoretischen Schwerpunkt zurückgerechnet werden muss. Auch so lässt sich der tatsächliche Schwerpunkt des Fahrzeuges ermitteln.

Vorteilhafterweise werden mit Hilfe einer Steuerbefehls-Automatik vordefinierte Steuerbefehlseingaben generiert, die zur Ermittlung des tatsächlichen Schwerpunktes nach der Art der vorliegenden Erfindung besonders gut geeignet sind. Solche Steuerbefehlseingaben können beispielsweise starke Nick- oder Rollbewegungen des Fahrzeuges sein. Die generierten, vorbestimmten Steuerbefehlseingaben werden dann zur Ansteuerung des Fahrzeuges verwendet, wobei über die Steuerbefehls-Eingabeschnittstelle die automatisch generierten Steuerbefehlseingaben empfangen werden können. Somit lässt sich der gesamte Prozess der Schwerpunktermittlung automatisieren und standardisieren.

Alternativ ist aber auch denkbar, dass dem Fahrzeugführer, beispielsweise einem Piloten, entsprechende Anweisungen vorgegeben werden, die er in Form von Steuerbefehlseingaben durchzuführen hat, um so die Ermittlung des tatsächlichen Schwerpunktes anzustoßen.

Bei dem Fahrzeug im Sinne der vorliegenden Erfindung kann es sich um ein Flugobjekt, beispielsweise ein Flugzeug oder einen Hubschrauber handeln, wodurch sich mit Hilfe der vorliegenden Erfindung der tatsächliche Schwerpunkt auch während des Fluges, auch mehrfach, ermitteln lässt. Hierbei ist der Vorteil insbesondere darin zu sehen, dass nicht nur der tatsächliche Schwerpunkt in der horizontalen Ebene (XY-Richtung) ermittelbar ist, sondern auch in der vertikalen Ebene (Z-Richtung), was normalerweise mit den aus dem Stand der Technik bekannten Verfahren nicht möglich ist.

Das Bewegungsmodell der Bewegungsmodelleinheit kann ein dynamisches Bewegungsmodell sein, bei dem die gesamte Dynamik des Fahrzeuges modellhaft nachgebildet wird. Das Bewegungsmodell kann aber auch ein kinematisches Bewegungsmodell sein, bei dem die Bewegung bezüglich der Steuerbefehlseingaben aus den kinematischen Zusammenhängen des Fahrzeuges abgeleitet werden. Schließlich kann das Bewegungsmodell in einer einfachen Form auch eine Datenbank sein, die zu bestimmten Steuerbefehlseingaben Maximalwerte hinsichtlich der Bewegung enthält, wobei anhand der Steuerbefehlseingaben und den in der Datenbank gespeicherten Referenzwerten dann die Bewegung abgeschätzt wird.

Das Bewegungsmodell des Fahrzeuges beschreibt somit den Zusammenhang zwischen den Steuerbefehlseingaben und der daraus resultierenden Bewegung des Fahrzeuges, so dass sich aus bekannten Steuerbefehlseingaben die Bewegung des Fahrzeuges ableiten lässt. Aus der abgeleiteten modellierten Bewegung des Fahrzeuges lässt sich dann, bspw. unter Zugrundelegung der Kinematik des Fahrzeuges, Beschleunigungswerte an verschiedenen Positionen im Fahrzeug herleiten bzw. berechnen.

Vorteilhafterweise ist die Beschleunigungssensorik zum Erfassen von rotatorischen und translatorischen Sensor-Beschleunigungsdaten eingerichtet. Die Bewegungsmodelleinheit ist vorteilhafterweise zum Berechnen von rotatorischen und/oder translatorischen Referenz-Beschleunigungsdaten eingerichtet.

Die Ermittlung des tatsächlichen Schwerpunktes kann dann beispielsweise zur Korrektur von Bewegungs- und/oder Beschleunigungsdaten einer Sensorik, die im theoretisch angenommenen Schwerpunkt des Fahrzeuges verbaut ist, verwendet werden, um so die Fehleranteile, die sich aus einer Schwerpunktablage ergeben, zu minimieren.

schen und translatorischen Sensor-Beschleunigungsdaten eingerichtet. Die Bewegungsmodelleinheit ist vorteilhafterweise zum Berechnen von rotatorischen und/oder translatorischen Referenz-Beschleunigungsdaten eingerichtet.

Die Ermittlung des tatsächlichen Schwerpunktes kann dann beispielsweise zur Korrektur von Bewegungs- und/oder Beschleunigungsdaten einer Sensorik, die im theoretisch angenommenen Schwerpunkt des Fahrzeuges verbaut ist, verwendet werden, um so die Fehleranteile, die sich aus einer Schwerpunktablage ergeben, zu minimieren.

Die Aufgabe wird im Übrigen auch durch das eingangs genannte Verfahren gelöst mit den Schritten:

- Ermitteln von Steuerbefehlseingaben zur Bewegungssteuerung des Fahrzeuges über eine Steuerbefehls-Eingabeschnittstelle,

- Berechnen von Referenz-Beschleunigungsdaten an einem Modell-Referenzpunkt des Fahrzeuges bezüglich der Steuerbefehlseingabe in Abhängigkeit von aus einem Fahrzeug-Bewegungsmodell abgeleiteten modellierten Bewegungen des Fahrzeuges bezüglich der über die Steuerbefehls-Eingabeschnittstelle ermittelten Steuerbefehlseingaben durch eine Bewegungsmodelleinheit,

- Ermitteln von Sensor-Beschleunigungsdaten, gemessen durch eine Beschleunigungssensorik an einem Sensor-Referenzpunkt des Fahrzeuges bezüglich der aus den Steuerbefehlseingaben resultierenden tatsächlichen Bewegungen des Fahrzeuges, und

- Ermitteln des tatsächlichen Schwerpunktes in Abhängigkeit von einem angenommenen Schwerpunkt und der Differenz zwischen den Referenz-Beschleunigungsdaten und den Sensor-Beschleunigungsdaten durch eine Recheneinheit.

Die Erfindung wird anhand der beigefügten Zeichnungen beispielhaft näher erläutert. Es zeigen:

Fig. 1    - Ablaufdiagramm der vorliegenden Erfindung;

Fig. 2    - schematische Darstellung der erfindungsgemäßen Einrichtung;

Fig. 3    - schematische Darstellung eines Flugobjektes mit Schwerpunktablage.

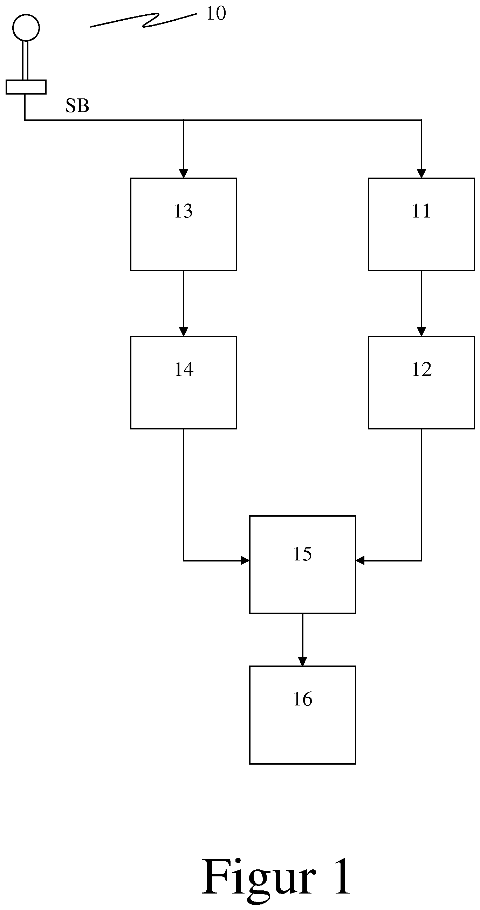

Figur 1 zeigt ein Ablaufdiagramm bezüglich der vorliegenden Erfindung. Mit Hilfe einer Steuerbefehlseingabeeinrichtung 10 werden manuelle Steuerbefehlseingaben durch den Piloten zur Bewegungssteuerung des Fahrzeuges eingegeben. Alternativ kann die Steuerbefehlseingabeeinrichtung 10 auch eine Steuerbefehls-Automatik sein, die automatisch Steuerbefehlseingaben zur Bewegungssteuerung des Fahrzeuges generiert.

Werden die Steuerbefehlseingaben SB des Fahrzeuges zugeführt, so ergibt sich hieraus eine Bewegung 11 des Fahrzeuges. Aus dieser Bewegung 11 des Fahrzeuges werden dann an einem Sensor-Referenzpunkt des Fahrzeuges die tatsächlichen Beschleunigungsdaten in Schritt 12 durch eine an diesem Sensor-Referenzpunkt verbauten Beschleunigungssensorik gemessen, so dass tatsächliche Beschleunigungsdaten aus der Bewegung 11 des Fahrzeuges ermittelbar sind. In diesem Ausführungsbeispiel ist der Sensor-Referenzpunkt des Fahrzeuges der theoretisch angenommene Schwerpunkt des Fahrzeuges.

Parallel hierzu werden die eingegebenen Steuerbefehlseingaben SB einem Bewegungsmodell zugeführt, das den Zusammenhang zwischen Steuereingaben und daraus resultierenden Bewegungen des Fahrzeuges dynamisch, kinematisch oder schätzungsweise abbildet. In Schritt 13 wird aus den eingegebenen Steuerbefehlseingaben SB eine simulierte Bewegung des Fahrzeuges aus dem Bewegungsmodell abgeleitet, aus der sich dann in Schritt 14 die Beschleunigungsdaten an einem Modell-Referenzpunkt des Fahrzeuges berechnen lassen. Die Referenzbeschleunigungsdaten spiegeln dabei die idealen Beschleunigungsdaten wider, wie sie auch gemessen werden würden, wäre der Schwerpunkt nicht verändert.

Sowohl die berechneten Referenz-Beschleunigungsdaten als auch die gemessenen Sensor-Beschleunigungsdaten werden nun einer Recheneinheit zugeführt, welche die Differenz in Schritt 15 der beiden Beschleunigungsdaten ermittelt. Denn aufgrund einer Veränderung der Schwerpunktlage des Fahrzeuges weichen die tatsächlich gemessenen Sensor-Beschleunigungsdaten bezüglich der Steuerbefehlseingaben SB von den Referenz-Beschleunigungsdaten ab, was durch Differenz in Schritt 15 festgestellt werden kann. Anhand der Differenz und der zugrunde gelegten Kinematik des Fahrzeuges lässt sich dann der tatsächliche Schwerpunkt des Fahrzeuges im Schritt 16 ermitteln, und zwar unter Zugrundelegung des theoretisch angenommenen Schwerpunktes, der auch Basis für die Berechnung der Referenz-Beschleunigungsdaten ist.

Sind Sensor-Referenzpunkt und Modell-Referenzpunkt nicht deckungsgleich, so können die jeweiligen Beschleunigungsdaten aufgrund des kinematischen Zusammenhangs auf den jeweiligen anderen Referenzpunkt zurückgerechnet werden.

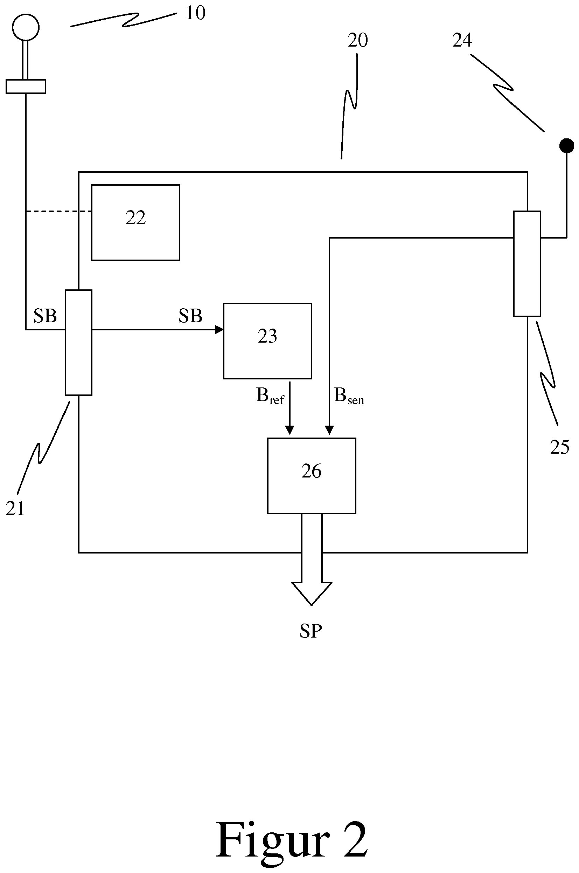

Figur 2 zeigt schematisch ein Blockdiagramm der Einrichtung 20 zur Ermittlung des tatsächlichen Schwerpunktes des Fahrzeuges, beispielsweise ein Flugobjekt. Über eine Schnittstelle 21 der Einrichtung 20 werden Steuerbefehlseingaben SB von einer Steuerbefehlseingabeeinrichtung 10 empfangen. Alternativ kann die Einrichtung 20 auch eine Steuerbefehlsautomatik 22 aufweisen, die automatisch entsprechende Steuerbefehlseingaben SB generiert, die extra für die Ermittlung des tatsächlichen Schwerpunktes nach Art der vorliegenden Erfindung geeignet sind.

Die über die Schnittstelle 21 empfangenen Steuerbefehlseingaben werden dann einer Bewegungsmodelleinheit 23 zugeführt, die dann unter Zugrundelegung eines geeigneten Bewegungsmodells des Fahrzeuges die aus den Steuerbefehlseingaben SB resultierenden Bewegungen des Fahrzeuges simuliert bzw. berechnet. Die angenommene bzw. simulierte Bewegung des Fahrzeuges auf Basis der eingegebenen Steuerbefehlseingaben SB wird dann dazu verwendet, die an dem Modell-Referenzpunkt, beispielsweise der theoretisch angenommene Schwerpunkt des Fahrzeuges, die dort auftretenden Beschleunigungsdaten $B_{Ref}$ zu berechnen, so dass Referenz-Beschleunigungsdaten vorliegen.

Gleichzeitig werden mit Hilfe einer im Sensor-Referenzpunkt des Fahrzeuges verbauten Sensorik 24 die dort auftretenden Beschleunigungsdaten $B_{Sen}$ gemessen, die dann über eine Schnittstelle 25 der Einrichtung 20 bereitgestellt werden.

Sowohl die Referenz-Beschleunigungsdaten $B_{Ref}$ als auch die gemessenen Sensor-Beschleunigungsdaten $B_{Sen}$ werden dann einer Recheneinheit 26 zugeführt, welche die Differenz beider Datensätze bildet und in Abhängigkeit von der theoretisch angenommenen Schwerpunktlage und der gebildeten Differenz dann den tatsächlichen Schwerpunkt des Fahrzeuges ermittelt. Dies kann beispielsweise über eine Kennlinie erfolgen, bei der je nach ermittelter Differenz der Daten die Schwerpunktablage feststellbar ist. Denkbar ist aber auch, dass auf Basis der Kinematik des Fahrzeuges und der festgestellten Differenz in den Daten dann der tatsächliche Schwerpunkt berechenbar wird.

Der so berechnete tatsächliche Schwerpunkt kann dann beispielsweise anderen Systemen des Fahrzeuges zur Verfügung gestellt werden, um so beispielsweise die von der Sensorik 24 erfassten Bewegungsdaten zu korrigieren.

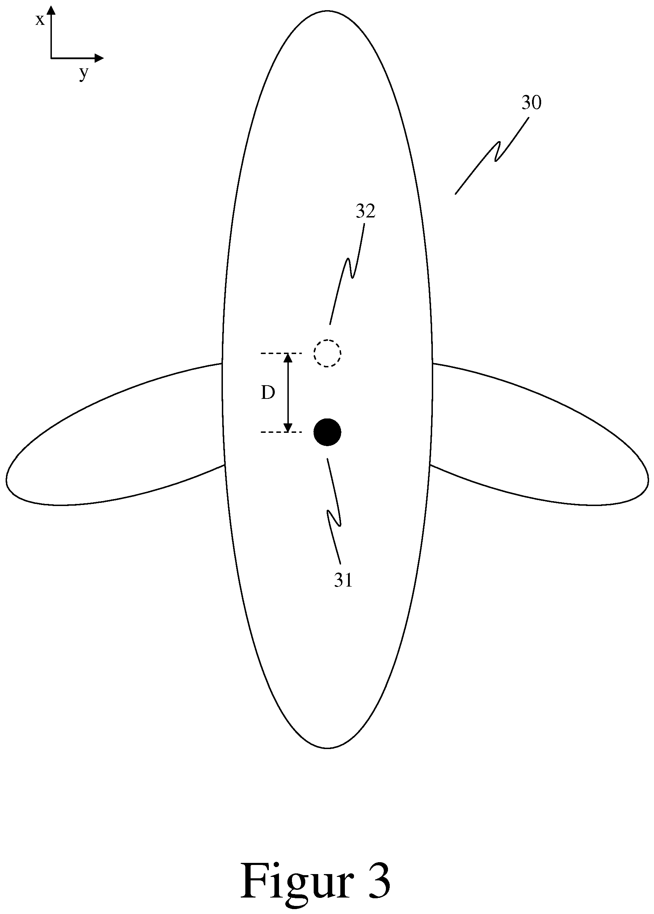

Figur 3 zeigt schematisch eine Schwerpunktablage bei einem Flugzeug 30. Der theoretisch angenommene Schwerpunkt des Flugzeuges 30 befindet sich an der Position 31. Die Position des theoretisch angenommenen Schwerpunktes 31 kann beispielsweise durch Berechnung eines Idealzustandes ermittelt werden. Denkbar ist aber auch, dass der theoretisch angenommene Schwerpunkt 31 am Boden durch Messungen oder Wägungen des Luftfahrzeuges vor dem Flug ermittelt wird. Im theoretisch angenommenen Schwerpunkt 31 kann auch die Sensorik verbaut sein, so dass der Punkt 31 auch der Sensor-Referenzpunkt sein kann. Verteilhafterweise ist auch der Modell-Referenzpunkt im Punkt 31. Der Modell-Referenzpunkt kann aber auch der tatsächliche, unbekannte Schwerpunkt sein, wobei eine Umrechnung beliebig möglich ist.

Durch veränderte Betriebsparameter des Flugzeuges 30 während des Fluges, beispielsweise durch Abnahme der Treibstoffmenge, kann sich der tatsächliche Schwerpunkt verschieben und von dem zuvor theoretisch angenommenen Schwerpunkt 31 abweichen. Dies ist in Figur 3 durch den gestrichelten Kreis 32 gekennzeichnet. Die Differenz D zwischen dem angenommenen Schwerpunkt 31 und dem tatsächlichen Schwerpunkt 32, hier im Beispiel der Figur 3 ausschließlich in horizontaler Ebene dargestellt, lässt sich aus der Differenz der Referenz-Beschleunigungsdaten und der tatsächlich gemessenen Sensor-Beschleunigungsdaten bestimmen, so dass ausgehend von dem angenommenen Schwerpunkt 31 auf den tatsächlichen Schwerpunkt 32 geschlossen werden kann.

Mit Hilfe der Drehrate $\omega$ und den Drehbeschleunigungen

$$\frac{d\omega}{dt}$$

Lässt sich aus den Referenzbeschleunigungen $a_{ref}$ im Modell-Referenzpunkt und den gemessenen Sensorbeschleunigungen $a_{mess}$ im Sensor-Referenzpunkt mit Hilfe des folgenden Zusammenhangs die neue Schwerpunktlage berechnen:

$$SP = \begin{pmatrix} X_{SP} \\ Y_{SP} \\ Z_{SP} \end{pmatrix}$$

$$a_{ref} = a_{mess} - \frac{d\omega}{dt} \times SP - \omega \times (\omega \times SP)$$

Aus dem Bewegungsmodell ist $a_{ref}$ bekannt. Die Schwerpunktablage berechnet sich sodann als:

$$J(SP) = a_{ref} - a_{mess} + \frac{d\omega}{dt} \times SP - \omega \times (\omega \times SP) \to 0$$

$$\min_{SP}(J(SP)) \to 0$$

Durch Minimierung des Fehlers zwischen $a_{ref}$ und $a_{mess}$ über den Schwerpunkt SP lassen sich die Koordinaten des Schwerpunktes eindeutig bestimmen. In diesem folgen die Schwerpunktkoordinaten aus einem funktionalen Zusammenhang, da obige Gleichung analytisch gelöst werden kann.

Ein weitere Möglichkeit ist die Minimierung auch über die Geschwindigkeit.

**Patentansprüche**

1. Einrichtung (20) zur Ermittlung des tatsächlichen Schwerpunktes (32) eines Fahrzeuges (30) mit:

    - einer Steuerbefehls-Eingabeschnittstelle (21) zum Ermitteln von Steuerbefehlseingaben (SB) zur Bewegungssteuerung des Fahrzeuges (30),
    - einer Sensorschnittstelle (25) zum Ermitteln von an einem Sensor-Referenzpunkt (31) des Fahrzeuges (30) durch eine Beschleunigungssensorik (24) gemessenen Sensor-Beschleunigungsdaten (Bsen) bezüglich der aus den Steuerbefehlseingaben (SB) resultierenden tatsächlichen Bewegungen des Fahrzeuges (30),

    **gekennzeichnet durch**

    - einer Bewegungsmodelleinheit (23), die zum Berechnen von Referenz-Beschleunigungsdaten ($B_{Ref}$) an einem Modell-Referenzpunkt (31) des Fahrzeuges bezüglich der Steuerbefehlseingaben (SB) in Abhängigkeit von aus einem Fahrzeug-Bewegungsmodell abgeleiteten modellierten Bewegungen des Fahrzeuges (30) bezüglich der über die Steuerbefehls-Eingabeschnittstelle (21) ermittelten Steuerbefehlseingaben (SB) eingerichtet ist, wobei das Fahrzeug-Bewegungsmodell eine Bewegung des Fahrzeuges hinsichtlich der Steuerbefehlseingaben ableitet, die einen angenommenen Schwerpunkt des Fahrzeuges berücksichtigt, und
- einer Recheneinheit (26), die zum Ermitteln des tatsächlichen Schwerpunktes (32) des Fahrzeuges (30) in Abhängigkeit von dem angenommenen Schwerpunkt (31) und der Differenz zwischen den Referenz-Beschleunigungsdaten ($B_{Ref}$) und den Sensor-Beschleunigungsdaten (Bsen) eingerichtet ist.

2. Einrichtung (20) nach Anspruch 1, **dadurch gekennzeichnet, dass** das Bewegungsmodell der Bewegungsmodelleinheit ein dynamisches Bewegungsmodell, ein kinematisches Bewegungsmodell und/oder eine Datenbank mit Referenzwerten bezüglich der Steuerbefehlseingaben ist.

3. Einrichtung (20) nach Anspruch 1 oder 2, **dadurch gekennzeichnet, dass** der Modell-Referenzpunkt und/oder Sensor-Referenzpunkt des Fahrzeuges der angenommene Schwerpunkt des Fahrzeuges ist.

4. Einrichtung (20) nach einem der vorhergehenden Ansprüche, **dadurch gekennzeichnet, dass** die Beschleunigungssensorik zum Erfassen von rotatorischen und/oder translatorischen Sensor-Beschleunigungsdaten (Bsen) und/oder die Bewegungsmodelleinheit zum Berechnen von rotatorischen und/oder translatorischen Referenz-Beschleunigungsdaten ($B_{Ref}$) eingerichtet ist.

5. Einrichtung (20) nach einem der vorhergehenden Ansprüche, **dadurch gekennzeichnet, dass** eine Steuerbefehls-Automatik (22) vorgesehen ist, die zum Generieren von vordefinierten Steuerbefehlseingaben zur automatischen Bewegungssteuerung des Fahrzeugs eingerichtet ist, wobei die Steuerbefehls-Eingabeschnittstelle (21) zum Empfang der automatisch generierten Steuerbefehlseingabe ausgebildet ist.

6. Verfahren zur Ermittlung eines tatsächlichen Schwerpunktes eines Fahrzeuges mit den Schritten:

   - Ermitteln von Steuerbefehlseingaben zur Bewegungssteuerung des Fahrzeuges über eine Steuerbefehls-Eingabeschnittstelle,
   - Ermitteln von Sensor-Beschleunigungsdaten, gemessen durch eine Beschleunigungssensorik an einem Sensor-Referenzpunkt des Fahrzeuges bezüglich der aus den Steuerbefehlseingaben resultierenden tatsächlichen Bewegungen des Fahrzeuges,
   - Berechnen von Referenz-Beschleunigungsdaten an einem Modell-Referenzpunkt des Fahrzeuges bezüglich der Steuerbefehlseingabe in Abhängigkeit von aus einem Fahrzeug-Bewegungsmodell abgeleiteten modellierten Bewegungen des Fahrzeuges bezüglich der über die Steuerbefehls-Eingabeschnittstelle ermittelten Steuerbefehlseingaben durch eine Bewegungsmodelleinheit, wobei das Fahrzeug-Bewegungsmodell eine Bewegung des Fahrzeuges hinsichtlich der Steuerbefehlseingaben ableitet, die einen angenommenen Schwerpunkt des Fahrzeuges berücksichtigt, und
   - Ermitteln des tatsächlichen Schwerpunktes in Abhängigkeit von dem angenommenen Schwerpunkt und der Differenz zwischen den Referenz-Beschleunigungsdaten und den Sensor-Beschleunigungsdaten durch eine Recheneinheit.

7. Verfahren nach Anspruch 6, **dadurch gekennzeichnet, dass** das Bewegungsmodell der Bewegungsmodelleinheit ein dynamisches Bewegungsmodell, ein kinematisches Bewegungsmodell und/oder eine Datenbank mit Referenzwerten bezüglich der Steuerbefehlseingaben ist.

8. Verfahren nach Anspruch 6 oder 7, **dadurch gekennzeichnet, dass** der Modell-Referenzpunkt und/oder Sensor-Referenzpunkt des Fahrzeuges der angenommene Schwerpunkt des Fahrzeuges ist.

9. Verfahren nach einem der Ansprüche 6 bis 8, **gekennzeichnet durch** Erfassen von rotatorischen und/oder translatorischen Sensor-Beschleunigungsdaten durch die Beschleunigungssensorik und Berechnen von rotatorischen und/oder translatorischen Referenz-Beschleunigungsdaten durch die Bewegungsmodelleinheit.

10. Verfahren nach einem der Ansprüche 6 bis 9, **gekennzeichnet durch** Generieren von vordefinierten Steuerbefehlseingaben zur automatischen Bewegungssteuerung des Fahrzeuges durch eine Steuerbefehls-Automatik und Zuführen der automatisch generierten Steuerbefehlseingaben der Steuerbefehls-Eingabeschnittstelle.

**Claims**

1. Device (20) for determining the actual center of gravity (32) of a vehicle (30), having:

- a control command input interface (21) for determining control command inputs (SB) for controlling the movement of the vehicle (30),
- a sensor interface (25) for determining sensor acceleration data (Bsen) which are measured by an acceleration sensor system (24) at a sensor reference point (31) of the vehicle (30) relating to the actual movements of the vehicle (30) resulting from the control command inputs (SB),

**characterized in**

- a movement modeling unit (23) which is set up to calculate reference acceleration data ($B_{Ref}$) at a model reference point (31) of the vehicle with respect to the control command inputs (SB) on the basis of modeled movements of the vehicle (30), which are derived from a vehicle movement model, with respect to the control command inputs (SB) determined via the control command input interface (21), whereby the vehicle movement model derives a movement of the vehicle with respect to the control command inputs taking into account an assumed center of gravity of the vehicle, and
- a computation unit (26) which is set up to determine the actual center of gravity (32) of the vehicle (30) on the basis of the assumed center of gravity (31) and the difference between the reference acceleration data ($B_{Ref}$) and the sensor acceleration data (Bsen).

2. Device (20) according to Claim 1, **characterized in that** the movement model from the movement modeling unit is a dynamic movement model, a kinematic movement model and/or a database containing reference values for the control command inputs.

3. Device (20) according to Claim 1 or 2, **characterized in that** the model reference point and/or the sensor reference point of the vehicle is/are the assumed center of gravity of the vehicle.

4. Device (20) according to one of the preceding claims, **characterized in that** the acceleration sensor system is set up to acquire rotational and/or translational sensor acceleration data (Bsen), and/or the movement modeling unit is set up to calculate rotational and/or translational reference acceleration data (BRef).

5. Device (20) according to one of the preceding claims, **characterized in that** an automatic control command system (22) is provided and is set up to generate predefined control command inputs for automatically controlling the movement of the vehicle, the control command input interface (21) being designed to receive the automatically generated control command input.

6. Method for determining an actual center of gravity of a vehicle, having the following steps:

- control command inputs for controlling the movement of the vehicle are determined via a control command input interface,
- sensor acceleration data which are measured by an acceleration sensor system at a sensor reference point of the vehicle relating to the actual movements of the vehicle resulting from the control command inputs,
- a movement modeling unit calculates reference acceleration data at a model reference point of the vehicle with respect to the control command input on the basis of modeled movements of the vehicle, which are derived from a vehicle movement model, with respect to the control command inputs determined via the control command input interface, whereby the vehicle movement model derives a movement of the vehicle with respect to the control command inputs taking into account an assumed center of gravity of the vehicle, and
- a computation unit determines the actual center of gravity on the basis of the assumed center of gravity and the difference between the reference acceleration data and the sensor acceleration data.

7. Method according to Claim 6, **characterized in that** the movement model from the movement modeling unit is a dynamic movement model, a kinematic movement model and/or a database containing reference values relating to the control command inputs.

8. Method according to Claim 6 or 7, **characterized in that** the model reference point and/or the sensor reference point of the vehicle is/are the assumed center of gravity of the vehicle.

9. Method according to one of Claims 6 to 8, **characterized by** acquisition of rotational and/or translational sensor acceleration data by the acceleration sensor system and calculation of rotational and/or translational reference acceleration data by the movement modeling unit.

**10.** Method according to one of Claims 6 to 9, **characterized by** generation of predefined control command inputs for automatically controlling the movement of the vehicle by an automatic control command system and supplying of the automatically generated control command inputs to the control command input interface.

**Revendications**

**1.** Dispositif (20), destiné à déterminer le centre de gravité réel (32) d'un véhicule (30), comprenant :

- une interface de saisie d'instructions de commande (21), destinée à déterminer des saisies d'instructions de commande (SB) pour commander le déplacement du véhicule (30),
- une interface de capteur (25), destinée à déterminer des données d'accélération du capteur ($B_{Sen}$) mesurées sur un point de référence de capteur (31) du véhicule (30) par un système capteur d'accélération (24) en ce qui concerne les déplacements effectifs du véhicule (30) résultant des saisies d'instructions de commande (SB),

**caractérisé par**

- une unité de modélisation du déplacement (23), qui est aménagée pour calculer des données d'accélération de référence ($B_{Ref}$) sur un point de référence de modélisation (31) du véhicule par rapport aux saisies d'instructions de commande (SB), en fonction de déplacements modélisés du véhicule (30) dérivés d'un modèle de déplacement du véhicule par rapport aux saisies d'instructions de commande (SB) déterminées par l'intermédiaire de l'interface de saisie d'instructions de commande (21), le modèle de déplacement du véhicule dérivant un déplacement du véhicule par rapport aux saisies d'instructions de commande qui tient compte d'un centre de gravité supposé du véhicule et
- une unité de calcul (26), qui est aménagée pour déterminer le centre de gravité réel (32) du véhicule (30) en fonction du centre de gravité supposé (31) et de la différence entre les données d'accélération de référence ($B_{Ref}$) et les données d'accélération du capteur (Bsen) .

**2.** Dispositif (20) selon la revendication 1, **caractérisé en ce que** le modèle de déplacement de l'unité de modélisation du déplacement est un modèle de déplacement dynamique, un modèle de déplacement cinématique et/ou une base de données contenant des valeurs de référence concernant les saisies d'instructions de commande.

**3.** Dispositif (20) selon la revendication 1 ou 2, **caractérisé en ce que** le point de référence de modélisation et/ou le point de référence de capteur du véhicule est le centre de gravité supposé du véhicule.

**4.** Dispositif (20) selon l'une quelconque des revendications précédentes, **caractérisé en ce que** le système capteur d'accélération est aménagé pour détecter des données d'accélération du capteur ($B_{Sen}$) en rotation et/ou en translation et/ou l'unité de modélisation du déplacement est aménagée pour calculer des données d'accélération de référence ($B_{Ref}$) en rotation et/ou en translation.

**5.** Dispositif (20) selon l'une quelconque des revendications précédentes, **caractérisé en ce qu'**il est prévu un automatisme d'instructions de commande (22) qui est aménagé pour générer des saisies d'instructions de commande prédéfinies pour commander automatiquement le déplacement du véhicule, l'interface de saisie d'instructions de commande (21) étant conçue pour réceptionner la saisie d'instructions de commande générée automatiquement.

**6.** Procédé, destiné à déterminer le centre de gravité réel d'un véhicule, comprenant les étapes consistant à :

- déterminer des saisies d'instructions de commande pour commander le déplacement du véhicule par l'intermédiaire d'une interface de saisie d'instructions de commande,
- déterminer des données d'accélération du capteur, mesurées par un système capteur d'accélération sur un point de référence de capteur du véhicule, à partir des déplacements effectifs du véhicule résultant des saisies d'instructions de commande,
- calculer des données d'accélération de référence sur un point de modélisation de référence du véhicule par rapport à la saisie d'instructions de commande, en fonction de déplacements modélisés du véhicule, dérivés d'un modèle de déplacement du véhicule par rapport à des saisies d'instructions de commande déterminées par l'intermédiaire de l'interface de saisie d'instructions de commande par une unité de modélisation du déplacement, le modèle de déplacements du véhicule dérivant un déplacement du véhicule par rapport aux saisies d'instructions de commande qui tient compte d'un centre de gravité supposé du véhicule et

- déterminer le centre de gravité réel, en fonction du centre de gravité supposé et de la différence entre les données d'accélération de référence et les données d'accélération du capteur par une unité de calcul.

7.  Procédé selon la revendication 6, **caractérisé en ce que** le modèle de déplacement de l'unité de modélisation du déplacement est un modèle de déplacement dynamique, un modèle de déplacement cinématique et/ou une base de données contenant des valeurs de référence concernant les saisies d'instructions de commande.

8.  Procédé selon la revendication 6 ou 7, **caractérisé en ce que** le point de référence de modélisation et/ou le point de référence de capteur du véhicule est le centre de gravité supposé du véhicule.

9.  Procédé selon l'une quelconque des revendications 6 à 8, **caractérisé par** la détermination de données d'accélération du capteur en rotation et/ou en translation par le système capteur d'accélération et par le calcul de données d'accélération de référence en rotation et/ou en translation par l'unité de modélisation du déplacement.

10. Procédé selon l'une quelconque des revendications 6 à 9, **caractérisé par** la génération de saisies d'instructions de commande prédéfinies pour commander automatiquement le déplacement du véhicule par un automatisme d'instructions de commande et pour amener les saisies d'instructions de commande générées à l'interface de saisie d'instructions de commande.

Figur 1

Figur 2

x

y

30

32

D

31

Figur 3

**EP 2 607 877 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5987397 A
- US 6275769 B1
- US 20100063718 A1
- WO 2004074804 A1